# FASCICULE DE BREVET EUROPEEN

(11) **EP 2 691 252 B1**
(45) Date de publication et mention de la délivrance du brevet: **03.06.2020**
(21) Numéro de dépôt: 12714749.4
(22) Date de dépôt: 29.03.2012
(51) Int. Cl.: B60K 37/00, G06F 3/044

(54) **MODULE DE COMMANDE ET D'AFFICHAGE POUR VEHICULE AUTOMOBILE**
STEUERUNGS- UND ANZEIGEMODUL FÜR KRAFTFAHRZEUGE
CONTROL AND DISPLAY MODULE FOR MOTOR VEHICLES

(30) Priorité: 31.03.2011 FR 1100975
(43) Date de publication de la demande: 05.02.2014
(73) Titulaire: Valeo Systemes Thermiques, 78320 Le Mesnil Saint Denis (FR)
(72) Inventeur: BERAUD, Henry, F-94300 Vincennes (FR)
(74) Mandataire: Pothmann, Karsten
(86) Numéro de dépôt international: PCT/FR2012/000111
(87) Numéro de publication internationale: WO 2012/131188

(56) Documents cités:
- EP-A1- 1 901 530
- JP-A- 2002 341 842

## Description

La présente invention concerne le domaine des modules de commande et d'affichage à surface tactile pour véhicule automobile. Plus particulièrement, un tel module trouve une application avantageuse pour les commandes situées à proximité du conducteur, au niveau du panneau de bord ou de la console avant d'un véhicule automobile pour, par exemple, commander des fonctions de climatisation, d'un système audio, d'un système de téléphonie, d'un système multimédia ou encore d'un système de navigation.

Les dispositifs de commande et d'affichage de véhicule automobile comportent un écran d'affichage pour l'affichage de données d'information ou de commande. Ces écrans peuvent être recouverts par exemple d'une dalle tactile transparente permettant la saisie de commandes par les utilisateurs du véhicule. Certains dispositifs comportent en outre des boutons de commande supplémentaires disposés à proximité de l'écran.

La dalle tactile permet de déterminer les coordonnées de l'appui d'un doigt d'utilisateur en utilisant par exemple les technologies résistive ou capacitive.

Ces dalles tactiles peuvent par exemple être des dalles tactiles capacitives et c'est l'approche plus ou moins soutenue du doigt ou d'un stylet qui provoque une perturbation repérable du champ capacitif et permet de définir la position du doigt ou stylet sur la dalle.

D'autre part, les dalles tactiles sont des éléments minces et fragiles. Il est donc nécessaire de les protéger notamment vis-à-vis des chocs qui pourraient être engendrés par les utilisateurs.

De plus, les constructeurs automobiles cherchent aujourd'hui à rendre les façades de véhicule plus ergonomiques pour l'utilisateur en proposant des modules de commande d'aspect lisse et uniforme au toucher.

Par ailleurs, afin d'obtenir une bonne qualité d'affichage, les constructeurs automobiles sont confrontés à différentes contraintes comme la réduction de la distance entre l'écran d'affichage et la surface externe de commande. De plus, dans le cas des dalles capacitives, la distance entre la surface de commande sur laquelle vient le doigt de l'utilisateur et la dalle tactile doit être la plus faible possible pour optimiser la sensibilité de la dalle tactile et l'inter-distance entre la surface de commande et la dalle tactile ne doit pas comporter d'air.

L'invention propose donc un module de commande et d'affichage amélioré pour véhicule automobile permettant d'obtenir une façade d'aspect lisse et uniforme au toucher et permettant d'obtenir une bonne qualité d'affichage.

Les modes de réalisation de la présente invention ont donc pour objet un module de commande et d'affichage pour véhicule automobile comforme à la revendication 1 dont le préambule est divulgué par le document EP1901530.

Selon un autre aspect de la présente invention, le film de maintien et de protection comprend une couche de polycarbonate.

Selon un aspect supplémentaire de la présente invention, la fixation du film de maintien et de protection sur les bords externes du cadre frontal est réalisée par collage.

Selon un aspect additionnel de la présente invention, la fixation du film de maintien et de protection sur les bords externes du cadre frontal est réalisée par surmoulage.

Selon un autre aspect de la présente invention, la fixation du film de maintien et de protection sur les bords externes du cadre frontal est réalisée par injection.

Selon un aspect additionnel de la présente invention, le film de maintien et de protection comporte une teinte opaque locale pour masquer au moins le rebord interne du boîtier à l'utilisateur.

Selon un autre aspect de la présente invention, le film de maintien et de protection comporte un film polariseur sur sa face externe.

Selon un aspect supplémentaire de la présente invention, le film de maintien et de protection comporte un vernis anti-rayure sur sa face externe.

Selon un autre aspect de la présente invention, le module de commande et d'affichage comporte également des boutons de commande, le film de maintien et de protection recouvrant également lesdits boutons de commande.

Selon un autre aspect de la présente invention, l'épaisseur du film de maintien et de protection est de 0,75 mm.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma d'une vue de face du module de commande et d'affichage selon un mode de réalisation de la présente invention;
- la figure 2 représente un schéma d'une vue en coupe transversale d'un module de commande et d'affichage selon un premier mode de réalisation de la présente invention selon une ligne de coupe I-I;
- la figure 3 représente un schéma d'une vue en coupe transversale d'un module de commande et d'affichage selon un deuxième mode de réalisation de la présente invention selon une ligne de coupe I-I;
- la figure 4 représente un schéma d'une vue en coupe transversale d'un module de commande et d'affichage selon un troisième mode de réalisation de la présente invention selon une ligne de coupe I-I;
- la figure 5 représente un schéma d'un détail II de la figure 2 selon un premier mode de réalisation de la présente invention ainsi que les angles de vision extrêmes des utilisateurs;
- les figures 6a à 6d représentent des schémas des différentes étapes d'assemblage des éléments d'un premier mode de réalisation d'un module de commande et d'affichage selon la présente invention;
- la figure 7a et 7b représente des vues schématiques de face du module de commande et d'affichage selon un mode de réalisation alternatif de la présente invention;

Sur ces dessins les mêmes numéros de référence représente les mêmes éléments.

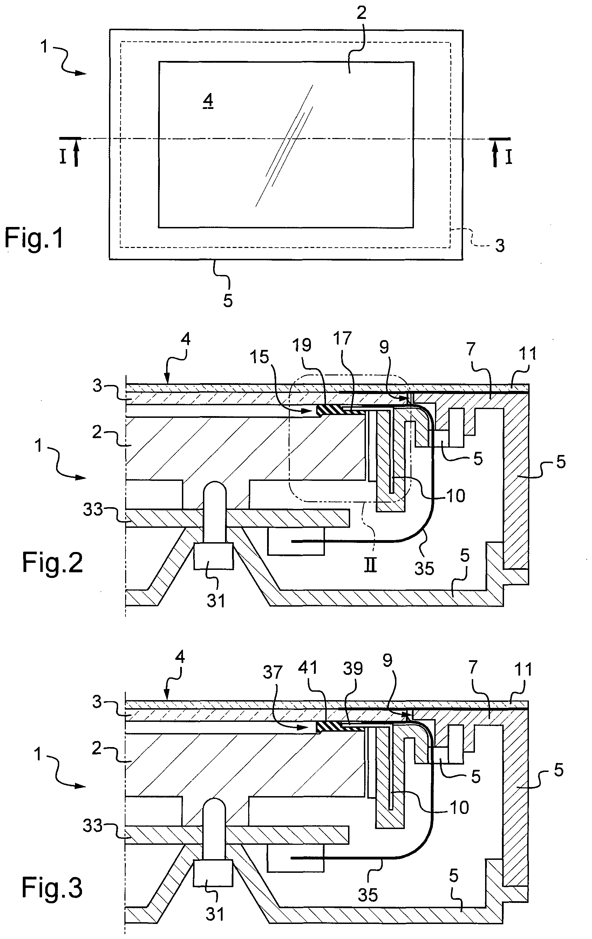

La figure 1 représente une vue schématique de face d'un module de commande et d'affichage 1 pour véhicule automobile, le module étant disposé sensiblement à la verticale dans le véhicule. Le module de commande et d'affichage 1 peut être fixé à proximité de l'utilisateur, par exemple au niveau de la console centrale du véhicule ou au niveau du panneau de bord (non représenté) pour par exemple commander des fonctions de climatisation, d'un système audio, d'un système de téléphonie, d'un système multimédia ou encore d'un système de navigation.
Sur cette figure, le module de commande et d'affichage 1 comporte un écran d'affichage 2, pour l'affichage de données d'information ou de commande, au moins une dalle tactile 3 (représentée en pointillés) et présente une surface frontale de commande 4 pour la saisie de commandes par un utilisateur, la surface frontale de commande 4 étant au moins superposée à l'écran d'affichage 2, et un boîtier 5 dans lequel sont logés l'écran d'affichage 2 et la dalle tactile 3. Dans le premier exemple représenté sur la figure 1, la dalle tactile 3 recouvre l'écran d'affichage 2 en dépassant sur les côtés de l'écran 2.

La dalle tactile 3 est transparente pour être placée devant l'écran d'affichage 2 et pour servir de moyen de saisie. La dalle tactile 3 détermine les coordonnées du point où l'utilisateur appuie avec son doigt sur la surface frontale de commande 4, dans le plan de la dalle 3. La dalle tactile 3 comporte, par exemple, des propriétés capacitives. Le déplacement ou l'appui du doigt d'un utilisateur provoque la création d'un signal variant avec la localisation et le déplacement de son doigt au contact et selon l'étendue sur cette surface.

Par ailleurs, L'écran d'affichage 2 est par exemple un écran TFT (utilisant la technologie de couches minces de transistor ou « Thin Film Transistor » en anglais), par exemple un écran 7 pouces (ou 17, 78 cm).

L'écran d'affichage 2 et la dalle tactile 3 permettent ainsi la saisie de commandes et l'affichage de données correspondantes.

La figure 2 représente une vue en coupe de dessus d'une partie du module de commande et d'affichage 1 permettant de mieux distinguer la position des différents éléments. Ainsi, le module de commande et d'affichage 1 comprend un boîtier 5 comportant un cadre frontal 7 présentant une ouverture 9 et un rebord interne 10. Le boîtier 5 est, par exemple, en plastique ou en élastomère rigide.

L'écran d'affichage 2 est positionné à l'intérieur du boîtier 5 et orienté vers la surface frontale de commande 4. La dalle tactile 3 est positionnée au niveau de l'ouverture 9 du cadre frontal 7 et superpose au moins partiellement l'écran d'affichage 2. La dalle tactile 3 est fixée derrière un film de maintien et de protection 11 dont la surface externe constitue la surface frontale de commande 4. Ainsi, la dalle tactile 3 est suspendue à l'arrière du film de maintien et de protection 11. Par film de maintien et de protection, il faut comprendre que la dalle tactile est maintenue par le film 11, ce dernier réalisant également une fonction de protection de la dalle tactile contre les agressions extérieures telles que par exemple les manipulations de l'utilisateur.

La fixation de la dalle tactile 3 sur le film de maintien et de protection 11 est réalisée par collage en utilisant une « colle optique » qui permet de garantir une bonne qualité de transparence. Le film de maintien et de protection 11 est lui fixé sur la surface externe du cadre frontale 7. La fixation est réalisée en fixant le film de maintien et de protection 11 de manière à ce qu'il soit « tendu » sur le cadre frontal 7.

Le film de maintien et de protection 11 est, par exemple, un film semi-rigide fin en polycarbonate qui peut être laminé, décoré par sérigraphie et fixé sur le cadre frontal 7. La fixation du film de maintien et de protection 11 sur la face frontale 7 peut être réalisée par collage, par surmoulage ou par injection. Le film de maintien et de protection a une épaisseur comprise entre 0,5 et 1,2 mm, ce qui est relativement fin de manière à améliorer la sensibilité de la dalle tactile, la collage de la dalle tactile sur le film de maintien et de protection permettant de compenser l'éventuel manque de rigidité du film de maintien et de protection du fait de sa faible épaisseur. Par ailleurs, des films de polycarbonate de 0,5, 0,75 ou 1mm sont disponibles dans le commerce ce qui assure un faible coût de revient. Il est également à noter que l'épaisseur du film de maintien et de protection 11 dépend de la taille de l'écran d'affichage 2 et de la dalle tactile 3. Ainsi, pour des écrans d'affichage 2 de 7" (17,78cm) de diagonale, une épaisseur de 0,75 mm conviendra et une épaisseur supérieure sera nécessaire pour des écrans d'affichage 2 de taille supérieure. Cependant, du fait du collage de la dalle tactile 3 sur le film de maintien et de protection 11, la dalle tactile 3 participe grandement à la rigidité de la surface frontale de commande 4 observée par l'utilisateur, ce qui permet de limiter l'épaisseur du film de maintien et de protection 11.

De plus, ce film de maintien et de protection 11 peut également être recouvert d'un film polariseur sur sa face externe de manière à limiter les effets de brillance ainsi que les empreintes de traces de doigts. Un vernis anti-rayures peut également être apposé sur la surface externe du film de maintien et de protection 11.

Par ailleurs, l'écran d'affichage 2 est, d'une part, fixé au boîtier 5 par l'arrière, par exemple, par des vis de fixation 31 situées à l'arrière du boîtier 5, c'est-à-dire au côté opposé à la surface frontale de commande 4 et, d'autre part, maintenu par l'avant au niveau de la périphérie de l'écran d'affichage 2 par le rebord interne 10 faisant saillie entre l'écran d'affichage 2 et la dalle tactile 3.

Afin de limiter son épaisseur, le rebord interne 10 du boîtier 5 est formé par un insert métallique fixé au boîtier 5, par exemple un insert en inox ou en acier qui peut être fixé par surmoulage, collage, bouterolage, rivetage, vissage ou clipsage au boîtier 5. Le boîtier 5 est, par exemple, surmoulé sur l'insert métallique 10.

De plus, afin d'assurer l'étanchéité, notamment vis-à-vis des poussières ou de l'humidité qui pourraient s'infiltrer entre l'écran d'affichage 2 et la dalle tactile 3, le module de commande et d'affichage 1 comprend également au moins un joint.

Selon un premier mode de réalisation représenté sur la figure 2, le module de commande et d'affichage 1 comporte un joint uniforme 15. Une première partie 17 du joint 15 est intercalée entre le rebord interne 10 formé par l'insert métallique et l'écran d'affichage 2 ce qui permet de maintenir l'écran d'affichage 2 en position tout en le protégeant d'un contact avec l'insert métallique 10 et une deuxième partie 19 du joint 15 dépasse du rebord interne vers le centre de l'écran d'affichage 2. Dans ce cas, le joint 15 est une mousse ouverte fortement compressible de sorte que la première partie 17 du joint 15 est comprimée de manière à réduire son épaisseur d'au moins 50% par rapport à son épaisseur initiale sans contrainte, de sorte que la deuxième partie 19 assure l'étanchéité entre l'écran d'affichage 2 et la dalle tactile 3. La première partie est, par exemple comprimée de 70% et la deuxième partie comprimée de 20%. Cette forte compression permet d'obtenir une deuxième partie 19 du joint 15 dont l'épaisseur est supérieure à l'épaisseur formée par la première partie 17 et le rebord interne 10 réunis et permet ainsi de combler l'interstice situé entre le rebord interne 10 et la dalle tactile de manière à assurer l'étanchéité entre l'écran d'affichage 2 et la dalle tactile 3.

Ce type de joints 15 peut être fabriqué à partir d'élastomère en mousse à cellules de type éthylène-propylène-diène monomère (EPDM) tel qu'un polyéthylène. En effet, ces matériaux présentent l'avantage d'avoir un prix de revient faible et d'être ininflammable ce qui est requis dans le domaine automobile.

De plus, le joint 15 permet de rattraper les éventuels écarts de tolérance concernant les épaisseurs des différents éléments du module de commande et d'affichage 1 et de protéger l'écran d'affichage 2 vis-à-vis des vibrations ou des chocs. Il est également à noter que de fortes variations de température peuvent survenir au niveau du module de commande et d'affichage 1 notamment à cause des sources d'éclairage présentes ce qui peut induire une dilatation des différents éléments du module de commande et d'affichage 1, le joint 15 permettant de maintenir les éléments en place et de limiter les contraintes notamment au niveau de l'écran d'affichage 2 et de la dalle tactile 3 qui sont des éléments relativement fragiles.

L'écran d'affichage 2 est donc maintenu d'une part par les vis de fixation 31 et d'autre part par le rebord interne 10 matérialisé par l'insert métallique par l'intermédiaire de la première partie 17 du joint 15. Cette première partie 17 du joint 15 peut, par exemple, avoir une longueur de 2 à 5 mm. La deuxième partie 19 du joint 15 ayant une longueur similaire de 2 à 5 mm. De plus, le joint 15 peut avoir un épaisseur initiale de 0,8mm, l'épaisseur étant réduite à 0,3mm après compression au niveau de la première partie 17. L'épaisseur de l'insert métallique 10 peut, par exemple, être de 0,3mm également. La deuxième partie 19 du joint 15 permet de joindre l'écran d'affichage 2 et la dalle tactile 3 et permet également de protéger la dalle tactile 3 d'un éventuel contact avec l'insert métallique 10. Cependant, la compression de la deuxième partie 19 du joint 15 doit être limitée de manière à limiter la pression exercé par le joint 15 sur la dalle tactile 3, ce qui pourrait conduire à une déformation de la dalle et de l'écran de protection 11 sur lequel la dalle est fixée, déformation qui pourrait être sensible à la vue et au toucher par l'utilisateur.

L'épaisseur de la dalle tactile 3 est d'environ 1,1 mm et l'épaisseur du film de maintien et de protection 11 est d'environ 0,75 mm ainsi la distance totale entre l'écran d'affichage 2 et la surface frontale de commande 4 est d'environ 3mm (0,75mm+1,1mm+0,8mm+0,3mm), l'écran d'affichage 2 présentant un rebord de 0,3mm à sa périphérie.

D'autre part, le module de commande et d'affichage 1 comprend un circuit imprimé 33 connecté d'une part à l'écran d'affichage 2 et d'autre part à la dalle tactile 3 par l'intermédiaire d'une nappe de connexion 35 et permettant de gérer les signaux électroniques de commande et d'affichage.

La liaison entre la nappe de connexion 35 et la dalle tactile 3 peut se trouver sur l'une ou l'autre des faces de la dalle tactile 3 suivant la technologie utilisée de sorte que lorsque la liaison est réalisée sur la face en contact avec l'écran de protection 11, la sur-épaisseur créée par la liaison entre la nappe de connexion 35 et la dalle tactile 3 doit être compensée, par exemple par une nappe de colle ou un film transparent pour éviter une différence de niveau sensible au toucher par l'utilisateur.

Selon un deuxième mode de réalisation représenté sur la figure 3, le joint est un joint bi-étagé 37 comprenant deux parties 39 et 41. La première partie 39 de faible épaisseur est destinée à être intercalée entre le rebord interne 10 formé par l'insert métallique et l'écran d'affichage 2. La deuxième partie 41 d'une épaisseur plus importante est destinée à dépasser du rebord interne 10 vers le centre de l'écran d'affichage 2 de manière à s'intercaler entre l'écran d'affichage 2 et la dalle tactile 3, les deux parties 39 et 41 du joint bi-étagé 37 ayant les même fonctions que les deux parties 17 et 19 du joint 15 dans le mode de réalisation précédent. Le joint bi-étagé 37 peut être formé d'une mousse ouverte ou d'une mousse fermée puisque dans ce mode réalisation, la première partie 39 du joint bi-étagé 37 n'est pas aussi comprimé que dans le mode de réalisation précédent. Ainsi, la première partie 39 du joint 37 peut, par exemple, avoir une longueur de 2 à 5 mm et une épaisseur initiale sans contrainte de 0,5 mm sans contrainte et 0,3 mm une fois comprimé tandis que la deuxième partie 41 peut avoir une une longueur de 2 à 5 mm et une épaisseur initiale sans contrainte de 0,9 ou 1 mm et de 0,8 mm environ une fois comprimée. La distance obtenue entre l'écran d'affichage 2 et la surface frontale de commande 4 pour ce mode de réalisation est la même que pour le mode de réalisation précédent. Les autres éléments du module de commande et d'affichage 1 de la figure 3 sont par ailleurs identiques au mode de réalisation précédent présenté sur la figure 2.

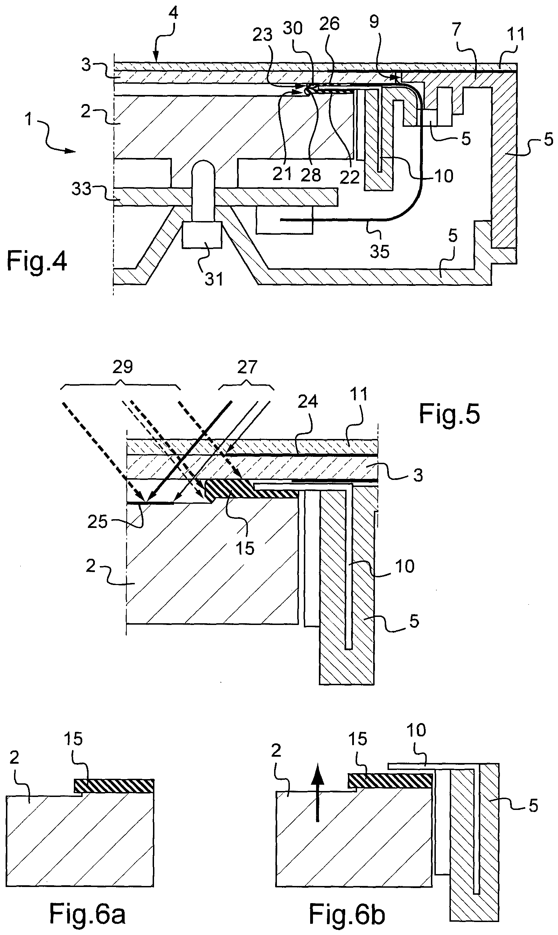

Selon un troisième mode de réalisation présenté sur la figure 4, en plus d'un joint 21 dont la première partie 22 est intercalée entre l'écran d'affichage 2 et le rebord interne 10 du boîtier 5, le module de commande et d'affichage 1 comprend un joint supplémentaire 23 dont la première partie 26 est intercalée entre le rebord interne 10 du boîtier 5 et la dalle tactile 3. les deuxièmes parties respectives 28 et 30 des deux joints 21 et 23 dépassant du rebord interne 10 vers le centre de l'écran d'affichage 2. La combinaison de deux joints 21 et 23 permet ainsi de créer une étanchéité entre l'écran d'affichage 2 et la dalle tactile 3. Dans ce cas, les deux joints 21 et 23 ont, par exemple, une épaisseur initiale sans contrainte de 0,5 ou 0,6 mm, la première partie des deux joints ayant une longueur de 2 à 5 mm et une épaisseur de 0,3 mm une fois comprimé et la deuxième partie ayant une longueur de 2 à 5 mm également. La distance obtenue entre l'écran d'affichage 2 et la surface frontale de commande 4 pour ce mode de réalisation est à peu près la même que pour les modes de réalisation précédents. Les autres éléments du module de commande et d'affichage 1 de la figure 4 sont par ailleurs identiques aux modes de réalisation précédents présentés sur les figures 2 et 3.

D'autre part, il est à noter que le ou les joints des modes de réalisation précédemment décrits permettent de masquer l'arête du rebord interne 10 constituée par l'insert métallique. En effet, le ou les joints peuvent être colorés, par exemple en noir mat, et ainsi masquer l'arête de l'insert métallique 10 qui n'a alors pas besoin d'être peint, ce qui réduit son coût.

De plus, dans les différents modes de réalisation présentés précédemment, le joint (respectivement les joints) peut être maintenu par la pression des éléments avec lesquels il est en contact mais le joint (respectivement les joints) peut aussi être un joint bi-adhésif, c'est-à-dire, que ses deux faces comportent une substance adhésive permettant d'assurer l'adhésion du joint (respectivement des joints) avec les surfaces des éléments avec lesquels il est en contact. Selon un mode de réalisation alternatif, le joint peut comprendre une substance adhésive sur l'une seulement de ses faces, ce qui permet de maintenir le joint en place notamment pendant la fabrication, l'étanchéité étant assurée par la compression du joint.

D'autre part, les éléments techniques du module de commande et d'affichage 1 doivent être masqués du champ de vision de l'utilisateur afin d'obtenir une finition esthétique réussie. Pour cela, on applique une teinte opaque 24 (correspondant à un film décor) au niveau du film de maintien et de protection 11 comme représenté sur la figure 5 schématisant un détail II de la figure 2. Cette teinte 24 est appliquée sur la face du film de maintien et de protection 11 en contact avec la dalle tactile 3 et le cadre frontal 7 de manière à être insensible au toucher pour l'utilisateur et à faciliter l'application d'éventuels films polariseurs ou vernis anti-rayure sur la face externe du film de maintien et de protection 11.

Ainsi, on a représenté sur la figure 5 par des flèches 27 et 29 les angles de vision d'un utilisateur considérés comme extrêmes et correspondant à un angle de 40° par rapport à la normale à l'écran d'affichage 2. La limite d'application pour la teinte opaque 24 est déterminée de manière à ce qu'elle ne masque pas le bord de l'image affichée (repérée par le trait 25) sur l'écran d'affichage 2 d'un côté (flèches 27) ce qui permet de masquer l'insert métallique de l'autre côté (flèches 29), l'arête de l'insert métallique 10 étant masquée par le joint 15. Ainsi l'utilisateur voit l'ensemble de l'image de l'écran d'affichage 2 mais ne voit pas les parties techniques du module de commande et d'affichage 1 et notamment l'insert métallique 10. De plus, il est à noter qu'au lieu de la teinte opaque 24, un film polariseur ou fumé permet également de masquer l'aspect généralement grisâtre du joint et de l'éventuelle colle.

Afin de mieux comprendre la disposition des différents éléments du module de commande et d'affichage 1, les figures 6a-6d représentent différentes étapes de l'assemblage de certains éléments pour le premier mode de réalisation dans lequel le joint 15 a une épaisseur uniforme sur toute sa longueur.

La figure 6a représente la première étape du procédé de l'assemblage dans laquelle le joint 15, est positionné sur l'écran d'affichage 2 de manière à être aligné avec le rebord de l'écran d'affichage 2. Dans le cas d'un joint bi-adhésif, le joint 15 est collé sur l'écran d'affichage 2.

La figure 6b représente la deuxième étape du procédé de l'assemblage dans laquelle l'écran d'affichage 2 est positionné dans le boîtier 5 de manière à ce que la première partie 17 du joint 15 située sur le coté extérieur de l'écran d'affichage 2 vienne en appui contre le rebord interne 10. Dans le cas d'un joint bi-adhésif, le joint est collé au rebord interne 10.

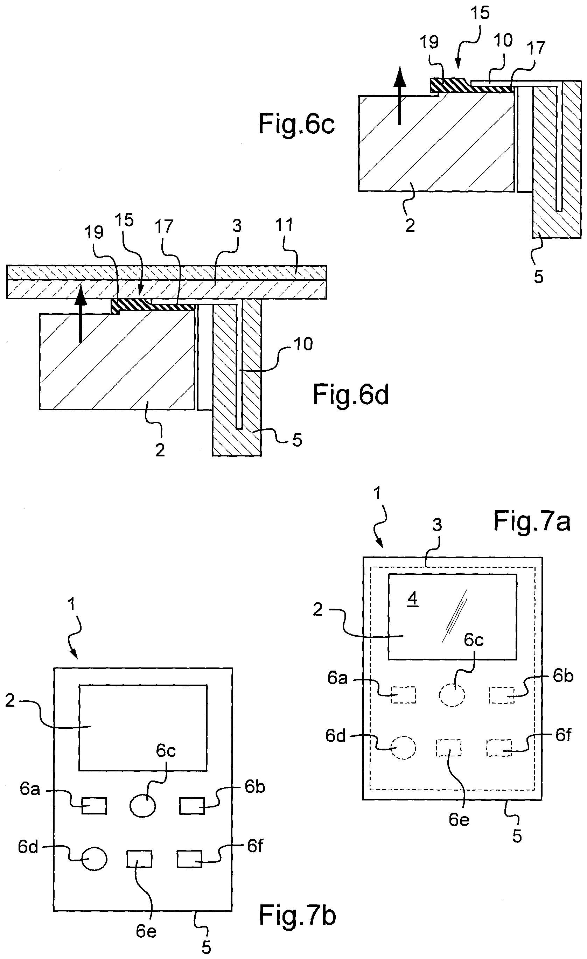

La figure 6c représente la troisième étape du procédé d'assemblage dans laquelle l'écran d'affichage 2 est ajusté en profondeur afin de comprimer la première partie 17 du joint 15 contre le rebord interne 10.

La figure 6d représente la quatrième étape du procédé d'assemblage dans laquelle l'ensemble comprenant la dalle tactile 3 et le film de maintien et de protection 11 est fixé sur la surface externe du cadre frontal 7 du boîtier 5, ce qui entraîne une légère compression de la deuxième partie 19 du joint 15 par la dalle tactile 3. Dans le cadre d'un joint bi-adhésif, la deuxième partie 19 du joint 15 vient se coller à la dalle tactile 3. Ainsi, la deuxième partie 19 du joint 15 offre une étanchéité entre l'écran d'affichage 2 et la dalle tactile 3.

La figure 7a représente une vue schématique de face d'un mode de réalisation alternatif d'un module de commande et d'affichage 1 pour véhicule automobile dans lequel le module 1 comprend différentes zones de commande tactile (délimitées en pointillés). En plus de la zone tactile correspondant à l'écran d'affichage 2, le module 1 comprend également des zones tactiles 6a à 6f permettant de simuler des boutons de commande. Ces zones peuvent par exemple être rétro-éclairées pour être visualisés en conduite de jour ou de nuit et donner l'illusion que ceux-ci sont complètement intégrés dans le module 1.

De plus, ces zones de commande tactile 6a-6f ne sont pas pourvues d'écran d'affichage à l'arrière de la dalle tactile, ce qui permet de réduire sensiblement les coûts, tout en étant transparent pour l'utilisateur. Ainsi, en appliquant un teinte noire telle que la teinte opaque 24 présentée sur la figure 5 sur l'ensemble du film de maintien et de protection sauf l'écran d'affichage 2 et les zones de commande rétro-éclairées 6a-6f, on obtient un surface frontale de commande lisse laissant apparaître l'image de l'écran d'affichage et les boutons rétro-éclairés comme représenté sur la figure 7b. De plus, dans une telle configuration, le boîtier 5 se prolonge vers les zones de commande tactile 6a-6f de manière à à produire un bloc rigide de soutien pour les équipements associés à ces zones de commande tactile 6a-6f.

Ainsi, les différents modes de réalisation de la présente invention permettent d'obtenir un maintien de l'écran d'affichage 2 en position même en cas de chocs ou de vibrations tout en garantissant une étanchéité entre l'écran d'affichage 2 et la dalle tactile 3. De plus, le film de maintien et de protection 11 maintenu sur le cadre frontal permet d'obtenir une finition lisse et uniforme de la façade extérieure du module de commande et d'affichage 1 tout en procurant une bonne qualité d'affichage et une bonne détection de la dalle tactile 3 du fait de la faible épaisseur du film de maintien et de protection 11 et de la faible distance entre le film de maintien et de protection 11 et l'écran d'affichage 2.

## Revendications

1. Module de commande et d'affichage (1) pour véhicule automobile comportant:
- un écran d'affichage (2) pour l'affichage de données,
- une dalle tactile (3) capacitive destinée à la saisie de commandes par un utilisateur, ladite dalle tactile (3) superposant au moins partiellement ledit écran d'affichage (2),
- un boîtier (5) dans lequel sont logés ledit écran d'affichage (2) et ladite dalle tactile (3), ledit boîtier (5) comportant un cadre frontal (7),
**caractérisé en ce que**:
- le module de commande et d'affichage (1) comporte également un film de maintien et de protection (11) dont l'épaisseur est comprise entre 0,5 et 1, 2 mm et qui est fixé sur les bords externes du cadre frontal (7) du boîtier (5), la dalle tactile (3) étant fixée, de manière suspendue, à l'arrière dudit film de maintien et de protection (11) et dans lequel la fixation entre la dalle tactile et le film de maintien et de protection est réalisée par collage.

2. Module de commande et d'affichage (1) selon la revendication 1 dans lequel le film de maintien et de protection comprend une couche de polycarbonate.

3. Module de commande et d'affichage (1) selon la revendication 1 ou 2 dans lequel la fixation du film de maintien et de protection sur les bords externes du cadre frontal est réalisée par collage.

4. Module de commande et d'affichage (1) selon la revendication 1 ou 2 dans lequel la fixation du film de maintien et de protection sur les bords externes du cadre frontal est réalisée par surmoulage.

5. Module de commande et d'affichage (1) selon la revendication 1 ou 2 dans lequel la fixation du film de maintien et de protection sur les bords externes du cadre frontal est réalisée par injection.

6. Module de commande et d'affichage (1) selon l'une des revendications précédentes dans lequel le film de maintien et de protection (11) comporte une teinte opaque (24) locale pour masquer au moins le rebord interne (10) du boîtier (5) à l'utilisateur.

7. Module de commande et d'affichage (1) selon l'une des revendications précédentes dans lequel le film de maintien et de protection (11) comporte un film polariseur sur sa face externe.

8. Module de commande et d'affichage (1) selon l'une des revendications précédentes dans lequel le film de maintien et de protection (11) comporte un vernis anti-rayure sur sa face externe.

9. Module de commande et d'affichage (1) selon l'une des revendications précédentes comportant également des boutons de commande, le film de maintien et de protection recouvrant également lesdits boutons de commande.

10. Module de commande et d'affichage (1) selon l'une des revendications précédentes dans lequel l'épaisseur du film de maintien et de protection (11) est de 0,75 mm.

## Patentansprüche

1. Steuer- und Anzeigemodul (1) für ein Kraftfahrzeug, aufweisend:
- einen Anzeigebildschirm (2) zum Anzeigen von Daten,
- eine kapazitive Berührtafel (3) zur Erfassung von Befehlen durch einen Benutzer, wobei die Berührtafel (3) den Anzeigebildschirm (2) zumindest teilweise überlagert,
- ein Gehäuse (5), in welchem der Anzeigebildschirm (2) und die Berührtafel (3) aufgenommen sind, wobei das Gehäuse (5) einen Vorderrahmen (7) aufweist,
**dadurch gekennzeichnet, dass**:
- das Steuer- und Anzeigemodul (1) ebenfalls einen Halte- und Schutzfilm (11) aufweist, dessen Dicke zwischen 0,5 und 1,2 mm beträgt und der an den Außenrändern des Vorderrahmens (7) des Gehäuses (5) befestigt ist, wobei die Berührtafel (3) hängend hinten am Halte- und Schutzfilm (11) befestigt ist und wobei die Befestigung zwischen der Berührtafel und dem Halte- und Schutzfilm durch Kleben erfolgt.

2. Steuer- und Anzeigemodul (1) nach Anspruch 1, wobei der Halte- und Schutzfilm eine Polycarbonatschicht umfasst.

3. Steuer- und Anzeigemodul (1) nach Anspruch 1 oder 2, wobei die Befestigung des Halte- und Schutzfilms an den Außenrändern des Vorderrahmens durch Kleben erfolgt.

4. Steuer- und Anzeigemodul (1) nach Anspruch 1 oder 2, wobei die Befestigung des Halte- und Schutzfilms an den Außenrändern des Vorderrahmens durch Überformen erfolgt.

5. Steuer- und Anzeigemodul (1) nach Anspruch 1 oder 2 wobei die Befestigung des Halte- und Schutzfilms an den Außenrändern des Vorderrahmens durch Einspritzen erfolgt.

6. Steuer- und Anzeigemodul (1) nach einem der vorhergehenden Ansprüche, wobei der Halte- und Schutzfilm (11) eine lokale undurchsichtige Färbung (24) aufweist, um zumindest den Innenrand (10) des Gehäuses (5) vor dem Benutzer zu verdecken.

7. Steuer- und Anzeigemodul (1) nach einem der vorhergehenden Ansprüche, wobei der Halte- und Schutzfilm (11) einen Polarisationsfilm auf seiner Außenseite aufweist.

8. Steuer- und Anzeigemodul (1) nach einem der vorhergehenden Ansprüche, wobei der Halte- und Schutzfilm (11) einen Kratzschutzlack auf seiner Außenseite aufweist.

9. Steuer- und Anzeigemodul (1) nach einem der vorhergehenden Ansprüche, ebenfalls aufweisend Steuerknöpfe, wobei der Halte- und Schutzfilm diese Steuerknöpfe ebenfalls bedeckt.

10. Steuer- und Anzeigemodul (1) nach einem der vorhergehenden Ansprüche, wobei die Dicke des Halte- und Schutzfilms (11) 0,75 mm beträgt.

## Claims

1. Control and display module (1) for motor vehicles including:
- a display screen (2) for displaying data,
- a capacitive touchpad (3) for input of commands by a user, said touchpad (3) at least partly overlapping said display screen (2),
- a casing (5) in which said display screen (2) and said touchpad (3) are housed, said casing (5) including a front frame (7),
**characterized in that**:
- the control and display module (1) also includes a retaining and protection film (11) the thickness of which is between 0.5 and 1.2 mm and which is fixed to the external edges of the front frame (7) of the casing (5), the touchpad (3) being secured, in a suspended manner, at the rear of said retaining and protection film (11) and wherein the fixing between the touchpad and the retaining and protection film is effected by gluing.

2. Control and display module (1) according to Claim 1 wherein the retaining and protection film comprises a layer of polycarbonate.

3. Control and display module (1) according to Claim 1 or 2 wherein the fixing of the retaining and protection film to the external edges of the front frame is effected by gluing.

4. Control and display module (1) according to Claim 1 or 2 wherein the fixing of the retaining and protection film to the external edges of the front frame is effected by overmolding.

5. Control and display module (1) according to Claim 1 or 2 wherein the fixing of the retaining and protection film to the external edges of the front frame is effected by injection molding.

6. Control and display module (1) according to any one of the preceding claims wherein the retaining and protection film (11) includes a local opaque tint (24) for masking at least the internal rim (10) of the casing (5) from the user.

7. Control and display module (1) according to any one of the preceding claims wherein the retaining and protection film (11) includes a polarizing film on its external face.

8. Control and display module (1) according to any one of the preceding claims wherein the retaining and protection film (11) includes a non-scratch coating on its external face.

9. Control and display module (1) according to any one of the preceding claims further including control buttons, the retaining and protection film also covering said control buttons.

10. Control and display module (1) according to any one of the preceding claims wherein the thickness of the retaining and protection film (11) is 0.75 mm.
